# EUROPEAN PATENT SPECIFICATION

(11) **EP 3 494 040 B1**
(45) Date of publication and mention of the grant of the patent: **04.05.2022**
(21) Application number: 17762248.7
(22) Date of filing: 04.08.2017
(51) Int. Cl.: B64C 39/02

(54) **UNMANNED VEHICLE FOR ROPE TRANSFER**
UNBEMANNTES FAHRZEUG FÜR SEILTRANSFER
VÉHICULE SANS PILOTE POUR LE TRANSFERT DE CORDE

(30) Priority: 05.08.2016 NO 20161271
(43) Date of publication of application: 12.06.2019
(73) Proprietor: Kongsberg Maritime AS, 3183 Horten (NO)
(72) Inventor: KONOBEVSKI, Kiril, 0263 Oslo (NO); CALLAWAY, Mark, 6003 Ålesund (NO); TENOVUO, Karno, 20520 Turku (FI); MATVEEV, Alexey, 7052 Trondheim (NO); NORMAN, Justin, Derby DE24 8BJ (GB)
(74) Representative: Zacco Norway AS
(86) International application number: PCT/NO2017/000020
(87) International publication number: WO 2018/026285

(56) References cited:
- EP-B1- 2 003 057
- CN-A- 105 752 337
- JP-A- H07 117 788
- Felipe Gonzalez: "Mobile Manipulator UAV : Robotic Arm on a UAV", , 18 November 2015 (2015-11-18), XP054977817, Retrieved from the Internet: URL:https://www.youtube.com/watch?v=V5l2x2 zZNiI [retrieved on 2017-10-24]
- Gary Peters: "How drones are changing the maritime industry", Ship Technology, 18 May 2016 (2016-05-18), XP055418006, Retrieved from the Internet: URL:http://www.ship-technology.com/feature s/featurehow-drones-are-changing-the-marit ime-industry-4865807/ [retrieved on 2017-10-23]

## Description

### Field of the invention

The present invention concerns a method for establishing a mechanical connection to or from a vessel by use of an unmanned vehicle. The present invention also concerns an unmanned vehicle for rope transfer.

### Background of the invention

Today vessels require crew on both the quay and the vessel to moor or unmoor a vessel in port. This is a labour intensive operation where crews throw lines to each other and then make them fast by hand or using deck machinery. When tugs are required for harbour approach/manoeuvring, manned operations have a crew on the assisted vessel who throws a light heaving line to the crew on the tug. The crew on the tug then ties the heaving line to a heavy tug line. The crew on the assisted vessel then winches up the heaving/tug line and makes the tug line fasten to a bollard. This is a very labour intensive operation.

Remote/autonomous vessels inherently have a problem of making rope connections as some or all of the crew has been removed.

Devices for providing connection between vessels are known by using for example manned aircraft and towline. Patent document US5797343 A discloses a system for establishing a towing connection between a marine casualty and a salvage vessel. This is achieved by means of a loop-forming arrangement, e.g. in the form of a chain, which is held distended in the horizontal plane and which is connected to a towline, the loop-forming arrangement being adapted to be brought in over and around a strong structural member on the casualty by means of a helicopter.

Publication WO0068077 A1 discloses an aircraft for transporting a load through the air between source and destination locations.

The publication JP H0 7117788 A discloses a unmanned surface vessel where rope impact is negligible.

The above aircrafts are labour intensive and do not include equipment for mooring a vessel. Remote/autonomous vessels will have a problem of making rope connections and to fasten a mooring line. The problem to be solved by the present invention is to establish mechanical connection to or from a vessel by unmanned operations. It is also an object to fasten a mooring line and also release it by unmanned operations. The purpose of the present invention is to provide a device and a method that addresses at least one of the above problems while retaining the benefits of prior art.

### Summary of the invention

This is achieved according to the invention by providing a method for establishing a mechanical connection to or from a vessel according to claim 1. More particularly, the invention concerns a method for establishing a mechanical connection to or from a vessel, the method comprising:
- attaching a first end of a connection line to an unmanned vehicle,
- attaching a second end of said connection line to a first connector,
- transferring said first end of said connection line using said unmanned vehicle to a second connector,
- attaching said first end of said connection line to said second connector,
wherein one of said first connector and said second connector is aboard a vessel and the remaining second or first connector is located aboard a vessel, a fixed location or onshore, wherein the unmanned vehicle and the said first end of the connection line are launched from a mother vessel, wherein the unmanned vehicle communicates and cooperates with a navigation system of the mother vessel, wherein the navigation system of the mother vessel is a dynamic positioning system, providing the position of the unmanned vehicle and mother vessel relative to each other at all times and perform maneuvers with the first end of the connection line smoothly without unanticipated changes in the tension or length connection of the line being transferred, whereby the method moves the mother vessel relative to the unmanned vehicle to aid with the delivery of the first end of the connection line, and compensate for environmental factors such as wind waves and ensure smooth delivery of the first end of the connection line.

In another aspect the present invention relates an unmanned vehicle for use in the method wherein said unmanned vehicle comprises equipment to grasp and release the line. The equipment to grasp may be any suitable equipment known to a person skilled in the art.

In another aspect the present invention relates a system for establishing a mechanical connection to or from a vessel, the system, according to claim 6, comprising a mother vessel, a connection line and an unmanned vehicle, wherein said unmanned vehicle comprises equipment to grasp and release the connection line, wherein the unmanned vehicle is launched from the mother vessel with a first end of the connection line attached to the unmanned vehicle, wherein the unmanned vehicle communicates and cooperates with a navigation system of the mother vessel wherein the navigation system of the mother vessel is a dynamic positioning system, providing the position of the unmanned vehicle and mother vessel relative to each other at all times and the system performs maneuvers with the first end of the connection line smoothly without unanticipated changes in the tension or length of the connection line being transferred, whereby the system is able to move the mother vessel relative to the unmanned vehicle to aid with the delivery of the first end of the connection line, and compensate for environmental factors such as wind waves and ensure smooth delivery of the first end of the connection line.

### Brief description of the drawings

The present invention will be described in greater detail in the following with reference to the exemplary embodiment shown in the drawing, in which:
Figures 1a-c shows an unmanned vehicle transferring a connection line between two vessels.
Figure 2a shows an unmanned vehicle transferring a connection line from a vessel to a mooring buoy.
Figure 2b shows an unmanned vehicle transferring a connection line from a winch on a mooring buoy to a vessel.
Figure 3a shows an unmanned vehicle transferring a connection line from a winch located onshore to a vessel.
Figure 3b shows an unmanned vehicle transferring a connection line from a vessel to a bollard located onshore.
Figures 4a-e shows a drone equipped with a gripping device, detection sensors and communication device.
Figure 5a shows an amphibious drone swimming.
Figure 5b shows an amphibious drone which has transferred a connection line between two vessels to the ship hull of a vessel.

### Detailed description

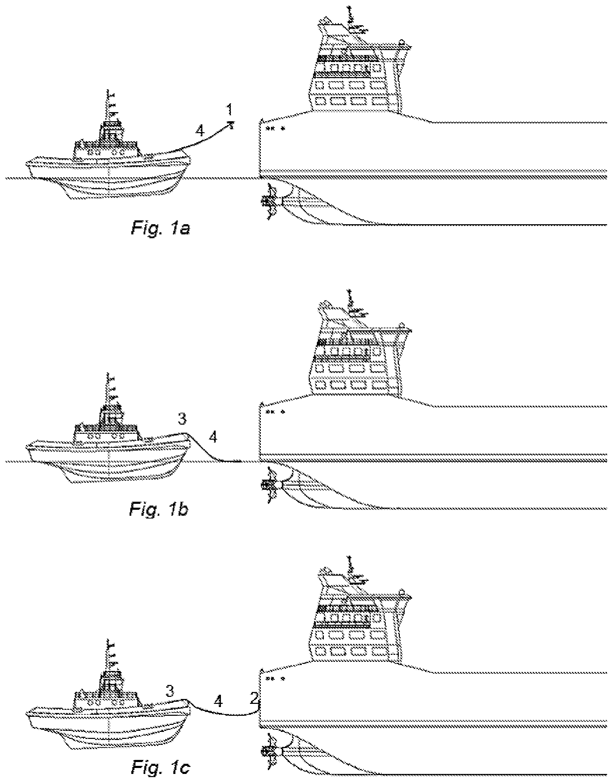

Figures 1a-c illustrate a system for establishing a mechanical connection between two vessels. A first end of a connection line 4 is attached to an unmanned vehicle 1. The unmanned vehicle is in this embodiment an unmanned aerial vehicle commonly known as a drone. A second end of said connection line 4 is attached to a first connector 3, where the first connector 3 is located for example aboard a vessel.

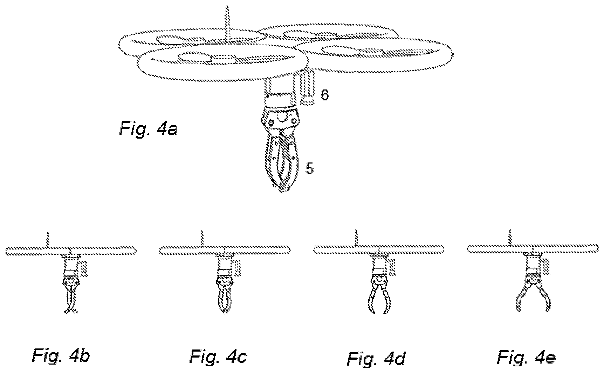

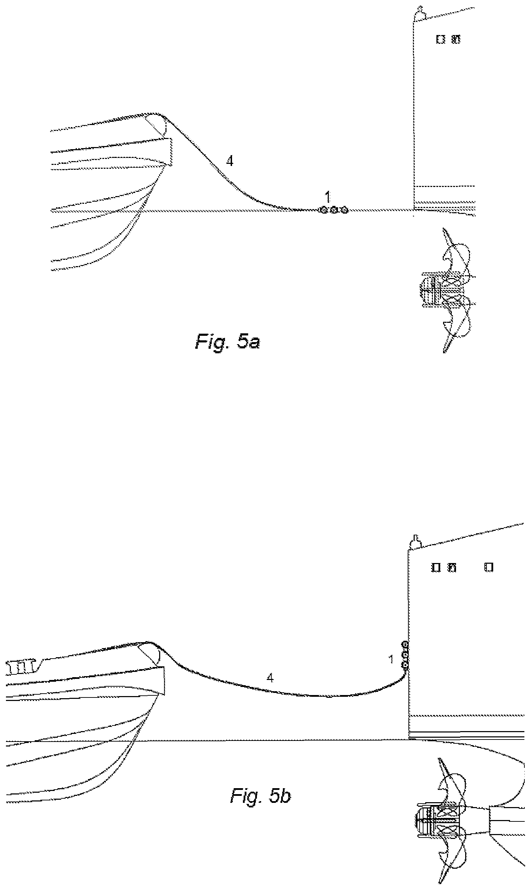

The unmanned aerial vehicle 1 transfers the first end of the connection line 4 to a second connector 2. The unmanned vehicle could be an aerial vehicle 1 as shown in Figure 1a or an amphibious unmanned vehicle as the swimming amphibious drone shown in Figure 1b and Figure 5a. The unmanned vehicle 1 comprises equipment to grasp 5 and release the connection line, and the line 4 is thereupon attached to the second connector 2 by the unmanned aerial vehicle 1. An example of a possible gripping device 5 on a drone is illustrated in Figure 4a. The gripping device can be many different types. Figures 4b-4e illustrates how the gripping device operates to fasten and release the line 4. This operation could be useful if a line needs to be delivered from a vessel to another vessel, such as tug boat to a vessel requiring assistance as illustrated in Figure 1.

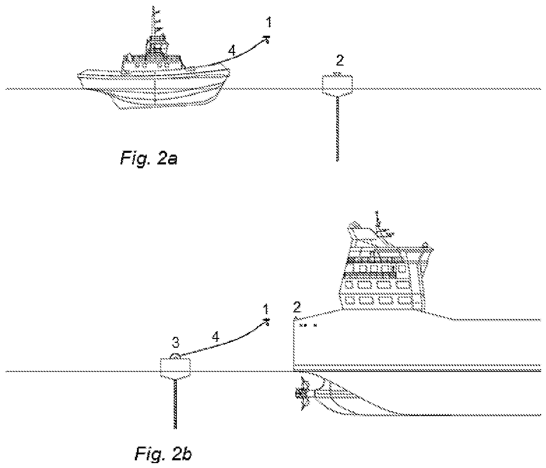

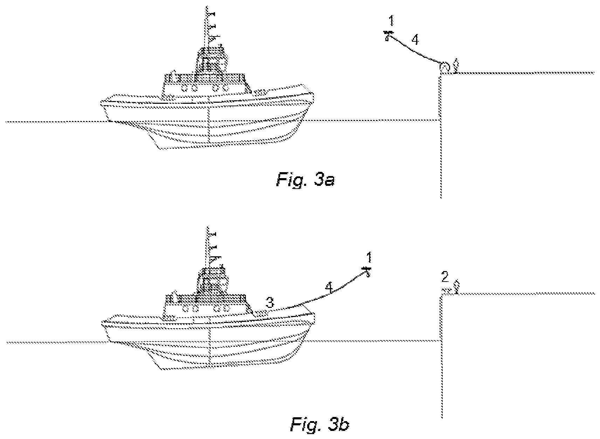

The first connector 3 and/ or the second connector 2 could be located aboard a vessel or at a fixed location as an oil or gas platform. The fixed location could be for example mooring buoys as illustrated in Figures 2a and 2b. One of the connectors could also be located onshore for mooring of a vessel to shore for example to a quay as illustrated in Figures 3a and 3b. In Figure 3a the winch is located onshore and in Figure 3b the winch is located on the vessel.

In one embodiment the line needs to be transferred from a vessel around a bollard and back to the vessel.
The connection line 4 could be made of any suitable material and could be any suitable mooring line or towing line. The line 4 could also be a heaving line, messenger line or provision hoses for fueling, water, etc. A floating buoy could be attached to the connection line 4. The connectors are for example bitts or bollards or any device suitable for mooring of a vessel.

The unmanned vehicle 1 is stored on shore or onboard said vessel. It could also be stored at a floating location that is located near to where these operations typically occur, for example just outside a port where tugs meet larger vessels. It could also be stationed on a mooring buoy and facilitates the connection between ship and buoy.

The unmanned vehicle could be aerial or amphibious, and has a docking station that will allow it to be serviced and provisioned. The unmanned vehicle 1 is powered by electricity or fuel fluid or a combination between the two. The power source could be for example batteries, fuel cells, or a small internal combustion engine.

As illustrated in Figures 4a-e the unmanned vehicle 1 is equipped with sensors 6 and cameras 6 that will allow it to identify lines, winches, spools, bollards and humans. It is capable to collect and deliver the line 4 from or to a winch, a spool, a bollard, a flat surface, a surface of water, a rope handling crane, and also a human for example from a hand of a crew member and any other suitable devices known to a person skilled in the art. The unmanned vehicle is also capable to fasten and unfasten the line 4.

The unmanned vehicle 1 is equipped with sensors 6 to measure the dynamic weight of the line as the line pays out from start location to final location. At least one sensor allows for controlling pick-ups, drop offs, payload weight. Also a sensor to measure environmental effects is included in the unmanned vehicle 1. In event of aerial drone the sensor will measure wind and weather conditions. In event of amphibious drone current and waves etc. are measured.

A control system that can either operate autonomously, semi autonomously or remotely by an operator is associated with the unmanned vehicle 1.

A navigation system will allow the unmanned vehicle 1 to control its movements and compensate for environmental factors. The outputs from the sensor(s) are utilized for environmental effects for operational control.

In the event of amphibious drone, the drone will be able to move on land, water, and along a ship's hull. The drone will have special equipment that will allow it to scale negative or positive slopes such as a ship's hull and quays. This equipment can include wheels/tracks and a device that allows it to attach itself to the surface that it is climbing such as suction or magnetic device.

The unmanned vehicle can include wheels, tracks and climbing equipment (suction or magnetic device) to move on land, water, and along a ship's hull. Devices that allow it to attach itself to the surface that it is climbing such as suction or magnetic device could also be included.

Equipment to scale negative or positive slopes (such as a ship's hull and quays) and sensors for at least current and waves could also be included on the unmanned vehicle 1.

The unmanned vehicle 1 is shaped to have a location feature that mates with a receiving location feature on the deck of the vessel contributing to make it easier to fasten the rope.

According to the invention there is provided a system wherein an unmanned vehicle 1, for example a drone, and a connection line 4 is launched from a mother vessel. The drone cooperates/communicates/coordinates with the navigation systems of the mother vessel such as dynamic positioning system to ensure the smooth delivery of the line. The drone and mother ship know where they are relative to each other at all times and can perform maneuvers with the rope smoothly without unanticipated changes in the tension or length line being transferred. The mother ship can move relative to the drone to aid with the delivery of the line such as when it needs to compensate for environmental factors such as wind waves etc.

While the invention has been described with reference to specific examples and embodiments, the scope of the invention is determined by the accompanying claims.

## Claims

1. Method for establishing a mechanical connection to or from a vessel, the method comprising:
- attaching a first end of a connection line (4) to an unmanned vehicle (1),
- attaching a second end of said connection line (4) to a first connector (3),
- transferring said first end of said connection line (4), using said unmanned vehicle (1), to a second connector (2),
- attaching said first end of said connection line (4) to said second connector (2),
wherein one of said first connector (3) and said second connector (2) is aboard a vessel and the remaining second (2) or first connector (3) respectively is located aboard the same or another vessel, a fixed location or onshore, wherein the unmanned vehicle (1) and the said first end of the connection line (4) are launched from a mother vessel, wherein the unmanned vehicle (1) communicates and cooperates with a navigation system of the mother vessel,
wherein the method is **characterized in that** the navigation systems of the mother vessel is a dynamic positioning system, providing the position of the unmanned vehicle (1) and mother vessel relative to each other at all times and perform maneuvers with the first end of the connection line (4) smoothly without unanticipated changes in the tension or length connection of the line (4) being transferred, whereby the method moves the mother vessel relative to the unmanned vehicle (1) to aid with the delivery of the first end of the connection line (4), and compensate for environmental factors such as wind waves and ensure smooth delivery of the first end of the connection line (4).

2. Method according to claim 1,
wherein said connection line (4) is selected from a group comprising a mooring line and a towing line, a heaving line, messenger line, or provision hoses.

3. Method according to any of claims 1-2,
wherein a floating buoy is attached to the connection line (4).

4. Method according to any of claims 1-3,
wherein the fixed location is a mooring buoy (2, 3).

5. Method according to any of claim 1-4,
wherein said unmanned vehicle (1) collects and/or delivers said line (4) to any of the group: bitts, bollard, winch, spool, flat surface, a surface of water, a human, rope handling crane.

6. A system for establishing a mechanical connection to or from a vessel, the system comprising a mother vessel, a connection line (4) and an unmanned vehicle (1) wherein said unmanned vehicle (1) comprises equipment to grasp (5) and release the connection line (4) , wherein the unmanned vehicle (1) is launched from the mother vessel with a first end of the connection line (4) attached to the unmanned vehicle (1), wherein the unmanned vehicle (1) communicates and cooperates with a navigation system of the mother vessel, and wherein the system is **characterized in that** the navigation system of the mother vessel is a dynamic positioning system, providing the position of the unmanned vehicle (1) and mother vessel relative to each other at all times and the system performs maneuvers with the first end of the connection line (4) smoothly without unanticipated changes in the tension or length of the connection line (4) being transferred, whereby the system is able to move the mother vessel relative to the unmanned vehicle (1) to aid with the delivery of the first end of the connection line (4), and compensate for environmental factors such as wind waves and ensure smooth delivery of the first end of the connection line (4).

7. The system according to claim 6, wherein said unmanned vehicle (1) is stored on shore or onboard the mother vessel.

8. The system according to any of claim 6-7,
wherein said unmanned vehicle (1) has a docking station that will allow it to be serviced and provisioned.

9. The system according to any of claim 6-8,
wherein said unmanned vehicle (1) is powered by electricity or fuel fluid or a combination between the two.

10. The system according to any of claim 6-9,
wherein said unmanned vehicle (1) comprises at least one sensor (6) to identify lines, winches, spools, bollards and humans.

11. The system according to any of claim 6-10,
wherein said unmanned vehicle (1) comprises at least one sensor (6) to measure line weight changes during operation.

12. The system according to any of claim 6-11,
comprising at least one sensor (6) to measure environmental effects.

13. The system according to any of claim 6-12,
utilizing output of said at least one sensor (6) for environmental effects for operational control.

14. The system according to any of claim 6-13,
wherein output of said at least one sensor (6) allows for controlling pick-ups, drop offs, payload weight.

15. The system according to any of claim 6-14,
wherein said unmanned vehicle (1) includes equipment to collect and deliver the first end of the connection line (4) from one of a winch, a spool, a bollard, a flat surface, and a human.

16. The system according to any of claim 6-15,
operating autonomously, semi autonomously or remotely controlled.

17. The system according to any of claim 6-16,
wherein said unmanned vehicle (1) is an unmanned aerial vehicle.

18. The system according to any of claim 6-17,
wherein said unmanned vehicle (1) is an unmanned amphibious vehicle including at least one of wheels, tracks and climbing equipment (suction or magnetic device) to move on land, water, and along a ship's hull and having equipment to scale negative or positive slopes (such as a ship's hull and quays) and sensors (6) for at least current and waves.

19. The system according to any of claim 6-18, shaped to have a location feature that mates with a receiving location feature on the deck of a vessel being assisted to make it easier to fasten the first end of the connection line (4).

20. The system according to any of claim 6-19 wherein said unmanned vehicle (1) can be remotely controlled or perform operations, fully or partially, according to prescribed algorithms analyzing the information it gets from its sensors (6) and camera (6).

## Patentansprüche

1. Verfahren zur Herstellung einer mechanischen Verbindung zu oder von einem Fahrzeug aus, welches Verfahren umfasst:
- Befestigen eines ersten Endes einer Verbindungsleine (4) an einem unbemannten Fahrzeug (1),
- Befestigen eines zweiten Endes der Verbindungsleine (4) an einem ersten Verbinder (3),
- Übertragen des ersten Endes der Verbindungsleine (4) an einen zweiten Verbinder (2) durch die Verwendung des unbemannten Fahrzeugs (1),
- Befestigen des ersten Endes der Verbindungsleine (4) an dem zweiten Verbinder (2),
wobei einer des ersten Verbinders (3) und des zweiten Verbinders (2) an Bord eines Fahrzeugs ist, und der verbleibende zweite (2) bzw. erste Verbinder (3) sich an Bord desselben oder eines anderen Fahrzeugs, einem festen Ort oder an Land befindet, wobei das unbemannte Fahrzeug (1) und das erste Ende der Verbindungsleine (4) von einem Mutterschiff aus eingesetzt werden, wobei das unbemannte Fahrzeug (1) mit einem Navigationssystem des Mutterschiffes in Verbindung und Zusammenwirkung steht,
wobei das Verfahren **dadurch gekennzeichnet ist, dass** das Navigationssystem des Mutterschiffes ein dynamisches Positionierungssystem ist, das jederzeit die Position des unbemannten Fahrzeugs (1) und Mutterschiffes relativ zueinander bereitstellt und Manöver mit dem ersten Ende der Verbindungsleine (4) reibungslos ohne das Übertragen unvorhergesehener Änderungen der Zug- oder Längenverbindung der Leine (4) durchführt, wobei das Verfahren das Mutterschiff relativ zum unbemannten Fahrzeug (1) bewegt, um die Lieferung des ersten Endes der Verbindungsleine (4) zu unterstützen, und Umgebungseinflüsse wie etwa Windwellen auszugleichen und eine reibungslose Lieferung des ersten Endes der Verbindungsleine (4) zu gewährleisten.

2. Verfahren nach Anspruch 1,
wobei die Verbindungsleine (4) aus einer eine Festmacherleine und eine Schleppleine, eine Wurfleine, eine Tragleine oder Versorgungsschläuche umfassenden Gruppe ausgewählt ist.

3. Verfahren nach einem der Ansprüche 1 bis 2,
wobei an der Verbindungsleine (4) eine Schwimmboje befestigt wird.

4. Verfahren nach einem der Ansprüche 1 bis 3,
wobei der feste Ort eine Ankerboje (2, 3) ist.

5. Verfahren nach einem der Ansprüche 1 bis 4,
wobei das unbemannte Fahrzeug (1) die Leine (4) einsammelt und/oder an irgendeinen aus der Gruppe liefert: Betinge, Poller, Winde, Spule, flache Oberfläche, eine Wasseroberfläche, einen Menschen, Seilhandhabungskran.

6. System zur Herstellung einer mechanischen Verbindung zu oder von einem Fahrzeug aus, welches System ein Mutterschiff, eine Verbindungsleine (4) und ein unbemanntes Fahrzeug (1) umfasst, wobei das unbemannte Fahrzeug (1) Ausrüstung zum Greifen (5) und Freigeben der Verbindungsleine (4) umfasst, wobei das unbemannte Fahrzeug (1) vom Mutterschiff aus eingesetzt wird, wobei ein erstes Ende der Verbindungsleine (4) am unbemannten Fahrzeug (1) befestigt ist, wobei das unbemannte Fahrzeug (1) mit einem Navigationssystem des Mutterschiffes in Verbindung und Zusammenwirkung steht, und wobei das System **dadurch gekennzeichnet ist, dass** das Navigationssystem des Mutterschiffes ein dynamisches Positionierungssystem ist, das jederzeit die Position des unbemannten Fahrzeugs (1) und Mutterschiffes relativ zueinander bereitstellt und das System Manöver mit dem ersten Ende der Verbindungsleine (4) reibungslos ohne das Übertragen unvorhergesehener Zug- oder Längenänderungen der Verbindungsleine (4) durchführt, wobei das System in der Lage ist, das Mutterschiff relativ zum unbemannten Fahrzeug (1) zu bewegen, um die Lieferung des ersten Endes der Verbindungsleine (4) zu unterstützen, und Umgebungseinflüsse wie etwa Windwellen auszugleichen und eine reibungslose Lieferung des ersten Endes der Verbindungsleine (4) zu gewährleisten.

7. System nach Anspruch 6, wobei das unbemannte Fahrzeug (1) an Land oder an Bord des Mutterschiffes gelagert ist.

8. System nach einem der Ansprüche 6 bis 7,
wobei das unbemannte Fahrzeug (1) eine Andockstation aufweist, die es ermöglicht, gewartet und bereitgestellt zu werden.

9. System nach einem der Ansprüche 6 bis 8,
wobei das unbemannte Fahrzeug (1) durch Elektrizität oder Brennstoffflüssigkeit oder eine Kombination zwischen den beiden angetrieben wird.

10. System nach einem der Ansprüche 6 bis 9,
wobei das unbemannte Fahrzeug (1) mindestens einen Sensor (6) umfasst, um Leinen, Winden, Spulen, Poller und Menschen zu identifizieren.

11. System nach einem der Ansprüche 6 bis 10,
wobei das unbemannte Fahrzeug (1) mindestens einen Sensor (6) zur Messung von Liniengewichtsänderungen während des Betriebs umfasst.

12. System nach einem der Ansprüche 6 bis 11,
umfassend mindestens einen Sensor (6) zur Messung von Umgebungseinflüssen.

13. System nach einem der Ansprüche 6 bis 12,
Nutzen der Ausgabe des mindestens einen Sensors (6) für Umgebungseinflüsse zur Betriebssteuerung.

14. System nach einem der Ansprüche 6 bis 13,
wobei die Ausgabe des mindestens einen Sensors (6) das Steuern von Aufnehmen, Absetzen, Nutzlastgewicht ermöglicht.

15. System nach einem der Ansprüche 6 bis 14,
wobei das unbemannte Fahrzeug (1) eine Ausrüstung zum Sammeln und Liefern des ersten Endes der Verbindungsleine (4) von einer Winde, einer Spule, einem Poller, einer flachen Oberfläche und einem Menschen umfasst.

16. System nach einem der Ansprüche 6 bis 15,
wobei der Betrieb autonom, halbautonom oder ferngesteuert erfolgt.

17. System nach einem der Ansprüche 6 bis 16,
wobei das unbemannte Fahrzeug (1) ein unbemanntes Luftfahrzeug ist.

18. System nach einem der Ansprüche 6 bis 17,
wobei das unbemannte Fahrzeug (1) ein unbemanntes Amphibienfahrzeug ist, das mindestens eines von Rädern, Ketten und Kletterausrüstung (Saug- oder Magnetvorrichtung) umfasst, um sich auf Land, Wasser und entlang eines Schiffsrumpfs zu bewegen, und Ausrüstung zum Skalieren negativer oder positiver Neigungen (wie Schiffsrumpf und Kais) und Sensoren (6) für wenigstens Strömung und Wellen aufweist.

19. System nach einem der Ansprüche 6 bis 18, das so ausgestaltet ist, dass es ein Ortsmerkmal aufweist, das mit einem Aufnahmeortsmerkmal auf dem Deck eines zu unterstützenden Fahrzeugs zusammenpasst, um das Befestigen des ersten Endes der Verbindungsleine (4) zu erleichtern.

20. System nach einem der Ansprüche 6 bis 19, wobei das unbemannte Fahrzeug (1) ferngesteuert werden kann oder Operationen ganz oder teilweise gemäß vorgeschriebenen Algorithmen ausführen kann, welche die Informationen analysieren, die es von seinen Sensoren (6) und seiner Kamera (6) erhält.

## Revendications

1. Procédé pour établir une connexion mécanique vers ou depuis un navire, ledit procédé comprenant les étapes consistant à :
- attacher une première extrémité d'une ligne de connexion (4) à un véhicule sans pilote (1),
- attacher une deuxième extrémité de ladite ligne de connexion (4) à un premier connecteur (3),
- transférer ladite première extrémité de ladite ligne de connexion (4), en utilisant ledit véhicule sans pilote (1), à un deuxième connecteur (2),
- attacher ladite première extrémité de ladite ligne de connexion (4) audit deuxième connecteur (2),
dans lequel l'un dudit premier connecteur (3) et dudit deuxième connecteur (2) est à bord d'un navire et le deuxième connecteur (2) ou le premier connecteur restant (3) étant respectivement situés à bord du même navire ou d'un autre navire, un emplacement fixe ou par terre, dans lequel le véhicule sans pilote (1) et ladite première extrémité de la ligne de connexion (4) sont lancés à partir d'un navire mère, le véhicule sans pilote (1) communiquant et coopérant avec un système de navigation du navire mère,
dans lequel le procédé est **caractérisé en ce que** le système de navigation du navire mère est un système de positionnement dynamique, fournissant la position du véhicule sans pilote (1) et du navire mère l'un par rapport à l'autre à tout moment et effectuant des manœuvres avec la première extrémité de la ligne de connexion (4) de façon lisse sans modifications non anticipées dans la connexion de tension ou de longueur de la ligne (4) étant transférées, le procédé déplaçant le navire mère par rapport au véhicule sans pilote (1) pour aider à l'administration de la première extrémité de la ligne de connexion (4), et compenser des facteurs environnementaux tels que des ondes de vent et assurer une distribution régulière de la première extrémité de la ligne de connexion (4).

2. Procédé selon la revendication 1,
dans lequel ladite ligne de connexion (4) est sélectionnée à partir d'un groupe comprenant une ligne d'amarrage et une ligne de remorquage, une ligne d'attrape, une ligne de messager ou des tuyaux de ravitaillement.

3. Procédé selon l'une quelconque des revendications 1 à 2,
dans lequel une bouée flottante est attachée à la ligne de connexion (4).

4. Procédé selon l'une quelconque des revendications 1 à 3,
dans lequel l'emplacement fixe est une bouée d'amarrage (2, 3).

5. Procédé selon l'une quelconque des revendications 1 à 4,
dans lequel ledit véhicule sans pilote (1) récupère et / ou livre ladite ligne (4) à l'un quelconque du groupe : bittes, bollard, treuil, bobine, surface plane, une surface d'eau, un humain, grue de manutention de câble.

6. Système pour établir une connexion mécanique vers ou depuis un navire, le système comprenant un navire mère, une ligne de connexion (4) et un véhicule sans pilote (1), dans lequel ledit véhicule sans pilote (1) comprend un équipement pour saisir (5) et libérer la ligne de connexion (4) , dans lequel le véhicule sans pilote (1) est lancé à partir du navire mère avec une première extrémité de la ligne de connexion (4) fixée au véhicule sans pilote (1), le véhicule sans pilote (1) communiquant et coopérant avec un système de navigation du navire mère, et dans lequel le système est **caractérisé en ce que** le système de navigation du navire mère est un système de positionnement dynamique, fournissant la position du véhicule sans pilote (1) et du navire mère l'un par rapport à l'autre à tout moment et le système effectue des manœuvres avec la première extrémité de la ligne de connexion (4) de façon lisse sans modifications non anticipées dans la tension ou la longueur de la ligne de connexion (4) étant transférées, le système étant apte à déplacer le navire mère par rapport au véhicule sans pilote (1) pour aider à l'administration de la première extrémité de la ligne de connexion (4), et compenser des facteurs environnementaux tels que des ondes de vent et assurer une distribution régulière de la première extrémité de la ligne de connexion (4).

7. Système selon la revendication 6, dans lequel ledit véhicule sans pilote (1) est stocké à terre ou à bord dudit navire.

8. Système selon l'une quelconque des revendications 6 à 7,
dans lequel ledit véhicule sans pilote (1) a une station d'accueil qui lui permettra d'être entretenu et approvisionné.

9. Système selon l'une quelconque des revendications 6 à 8,
dans lequel ledit véhicule sans pilote (1) est alimenté par l'électricité ou un fluide combustible ou une combinaison des deux.

10. Système selon l'une quelconque des revendications 6 à 9,
dans lequel ledit véhicule sans pilote (1) comprend au moins un capteur (6) pour identifier les lignes, les treuils, les bobines, les bollards et les humains.

11. Système selon l'une quelconque des revendications 6 à 10,
dans lequel ledit véhicule sans pilote (1) comprend au moins un capteur (6) pour mesurer les changements de poids de ligne pendant le fonctionnement.

12. Système selon l'une quelconque des revendications 6 à 11,
comprenant au moins un capteur (6) pour mesurer les effets environnementaux.

13. Système selon l'une quelconque des revendications 6 à 12,
utilisant la sortie dudit au moins un capteur (6) pour les effets environnementaux pour la commande opérationnelle.

14. Système selon l'une quelconque des revendications 6 à 13,
dans lequel la sortie dudit au moins un capteur (6) permet de contrôler les prises, les chutes, le poids de la charge utile.

15. Système selon l'une quelconque des revendications 6 à 14,
dans lequel ledit véhicule sans pilote (1) comprend un équipement pour récupérer et livrer la première extrémité de la ligne de connexion (4) à partir d'un treuil, d'une bobine, d'un bollard, d'une surface plane et d'un humain.

16. Système selon l'une quelconque des revendications 6 à 15,
fonctionnant de manière autonome, semi-autonome ou par télécommandé.

17. Système selon l'une quelconque des revendications 6 à 16,
dans lequel ledit véhicule sans pilote (1) est un véhicule aérien sans pilote.

18. Système selon l'une quelconque des revendications 6 à 17,
dans lequel ledit véhicule sans pilote (1) est un véhicule amphibie sans pilote comprenant au moins l'un parmi des roues, des chenilles et un équipement d'escalade (aspiration ou dispositif magnétique) pour se déplacer sur terre, sur l'eau, et le long de la coque d'un navire et ayant un équipement pour mesurer les pentes négatives ou positives (telles que la coque et les quais d'un navire) et des capteurs (6) pour au moins le courant et les vagues.

19. Système selon l'une quelconque des revendications 6 à 18, formé pour avoir une caractéristique de localisation qui s'accouple avec une caractéristique de localisation de réception sur le pont d'un navire assisté pour faciliter la fixation de la première extrémité de la ligne de connexion (4).

20. Système selon l'une quelconque des revendications 6 à 19, dans lequel ledit véhicule sans pilote (1) peut être télécommandé ou effectuer des opérations, entièrement ou partiellement, selon des algorithmes prescrits analysant les informations qu'il obtient de ses capteurs (6) et de sa caméra (6).
